# EUROPÄISCHE PATENTSCHRIFT

(11) **EP 2 897 006 B1**
(45) Veröffentlichungstag und Bekanntmachung des Hinweises auf die Patenterteilung: **25.05.2016**
(21) Anmeldenummer: 14199326.1
(22) Anmeldetag: 19.12.2014
(51) Int. Cl.: G05B 19/042, E05F 15/73

(54) **Vorrichtung zum berührungslosen Betätigen einer Schiebetür eines Kraftfahrzeuges**
Device for contactlessly actuating a sliding door of a motor vehicle
Dispositif d'actionnement sans contact d'une porte coulissante d'un véhicule automobile

(30) Priorität: 20.01.2014 DE 102014100580
(43) Veröffentlichungstag der Anmeldung: 22.07.2015
(73) Patentinhaber: Huf Hülsbeck & Fürst GmbH & Co. KG, 42551 Velbert (DE)
(72) Erfinder: Schindler, Mirko, 42549 Velbert (DE); Sanborn, James, Hudson, MI Michigan 49247 (US)
(74) Vertreter: Zenz Patentanwälte Partnerschaft mbB

(56) Entgegenhaltungen:
- DE-A1-102010 053 836
- JP-A- 2007 308 008

## Beschreibung

Die Erfindung betrifft eine Vorrichtung zum berührungslosen Betätigen einer Schiebetür eines Kraftfahrzeuges. Insbesondere betrifft die Erfindung eine Vorrichtung mit einer kapazitiven Sensorelektrode zur Erfassung einer Bediengeste zur Betätigung einer Schiebetür.

Es ist bekannt, Schiebetüren an Kraftfahrzeugen mit kapazitiven Sensorelektroden zu koppeln, um die Betätigung der Schiebetür zu erleichtern.

Die DE 10 2010 053 836 A1 beschreibt eine solche Vorrichtung. Bei der dort beschriebenen Vorrichtung sind mehrere Sensorelektroden im Bereich der Schiebetür angeordnet, wobei eine der Sensorelektroden stellungsabhängig von der Schiebetür selbst überdeckt wird.

Außerdem ist eine Vorrichtung zum automatischen Betätigen einer Schiebetür eines Fahrzeuges aus der US 6,972,575 B2 bekannt. Eine solche Vorrichtung weist eine kapazitive Sensorelektrode auf, die entlang des Öffnungsbereiches der Schiebetür eines Fahrzeuges angebracht ist.

Die DE 10 2011 008 275 A1 offenbart eine entsprechende Sensoreinheit, die zur Erfassung von berührungslosen Betätigungen einer Fahrzeugtür geeignet ist.

Aus der JP 2007 308808 A ist eine Schiebetür mit einer kapazitiven Sensoreinrichtung bekannt, wobei die Sensoreinrichtung in Abhängigkeit von der Bewegungsrichtung unterschiedliche Empfindlichkeit aufweist.

Die Auswerteverfahren und Ansteuerungsverfahren für derartige kapazitive Sensorelektroden sind in verschiedener Form im Stand der Technik offenbart. Es gibt außerdem im Markt verfügbare Ansteuerungs- und Auswerteschaltungen für derartige Sensoreinrichtungen.

Zwischen der Sensorelektrode, die auf ein vorgegebenes Potential gebracht wird und einer Referenzelektrode, z.B. der Fahrzeugmasse oder der Masse des unter dem Fahrzeug befindlichen Bodens bildet sich eine Kapazität aus. Diese Kapazität ist veränderbar, wenn sich in dem sensitiven Bereich der Sensoranordnung ein Körper bewegt, beispielsweise der Fuß eines Benutzers. Die Erfassung der Kapazität selbst ist in verschiedener Weise möglich. Beispielsweise kann als Messwert für die Kapazität eine Anzahl getakteter Entladevorgänge oder eine Entladezeitdauer verwendet werden. Beispielsweise ist auch aus der DE 196 17 038 A1 eine kapazitive Erfassung einer Annäherung an einen Fahrzeugtürgriff bekannt.

Aufgabe der Erfindung ist es, den erforderlichen Konstruktionsaufwand und die Anzahl der Komponenten für derartige Schiebetürsensoren zu reduzieren sowie die Erfassungsgenauigkeit zu verbessern.

Diese Aufgabe wird gelöst durch eine Vorrichtung mit den Merkmalen des Patentanspruches 1.

Erfindungsgemäß ist im Bereich der Schiebetür, beispielsweise im unteren Bereich des Fahrzeuges zwischen Tür und Boden, eine kapazitive Sensorelektrode angeordnet. Diese Sensorelektrode kann in herkömmlicher Weise gestaltet sein, insbesondere als langgestreckte Sensorelektrode. Die Sensorelektrode ist mit einer Steuer- und Auswerteschaltung gekoppelt. Die Steuer- und Auswerteschaltung dient der oben bereits beschriebenen Kopplung der Sensorelektrode mit vorgegebenen Umladespannungen. Die Kapazität der Sensorelektrode oder die Änderung der Kapazität wird zyklisch erfasst, um eine Veränderung der Umgebung und damit eine Bedienung zu erfassen.

Die Steuer- und Auswerteeinrichtung ist zum Empfangen oder Erfassen der Positionsinformation der Schiebetür ausgebildet. Dazu kann die Steuer- und Auswerteeinrichtung beispielsweise mit der Antriebseinheit der Schiebetür gekoppelt sein, jedoch auch mit einem Steuergerät dieser Antriebseinheit. Wesentlich ist, dass die tatsächliche Stellung der Schiebetür für die Steuerund Auswerteeinrichtung der kapazitiven Sensorelektrode abfragbar gekoppelt ist.

Es ist dabei möglich, die Positionsinformationen der Schiebetür auf wenige diskrete Werte zu beschränken, also beispielsweise den Zuständen "geöffnet" oder "geschlossen", es ist jedoch auch möglich, die Zwischenwerte der Positionsinformationen an die Steuer- und Auswerteeinrichtung der kapazitiven Sensoreinrichtung bereitzustellen.

Die Steuer- und Auswerteeinrichtung bezieht diese Werte in die Steuerung und/oder Auswertung der Sensorelektroden ein. In Abhängigkeit von der Position der Schiebetür wird die Sensorelektrode angesteuert oder die von der Sensorelektrode gelieferten Werte werden in Abhängigkeit von dieser Position ausgewertet.

Der Erfindung liegt die Erkenntnis zugrunde, dass in Gegensatz zum Stand der Technik eine einzige Sensorelektrode sowohl zur Erfassung z.B. eines Öffnungswunsches als auch eines Schließwunsches bei geöffneter Tür oder der Überwachung eines Einklemmschutzes möglich ist, wenn die Stellung der Tür in die Steuerung und/oder Auswertung der Sensorelektroden einbezogen wird. Je nach Stellung der Schiebetür variiert der Einfluss der Schiebetür auf die Sensorelektrode. Es kann bei einer bestimmten Stellung, beispielsweise einer geschlossenen Tür, zu einer teilweisen Schirmung der Sensorelektrode gegenüber dem Raumbereich vorliegen, der zur Erfassung vorgesehen ist. Andererseits kann die Entfernung der Schiebetür zu einer veränderten Ausbreitung der Feldlinien um die Sensorelektrode führen und damit zu einem veränderten Erfassungsbereich oder einer anderen Sensitivität.

Die erfindungsgemäße Kopplung der Steuer- und Auswerteeinrichtung der Sensorelektrode mit der Lagesteuerung der Schiebetür erlaubt es, die Sensitivität der Sensorelektrode durch eine variierte Ansteuerung an die Lage der Tür anzupassen. Zusätzlich oder alternativ ist es auch möglich, die von der Sensorelektrode gelieferten Messdaten in Abhängigkeit von der Lage der Schiebetür nach anderen Kriterien auszuwerten. Wesentlich ist, dass die Steuer- und Auswerteeinrichtung die Lageinformationen in die Sensorauswertung oder Sensoransteuerung einbezieht.

Die Vergleichswerte oder Schwellwerte für eine Erfassung einer Betätigung bei Auswertung der Sensorsignale werden in Abhängigkeit von der Türposition gewählt. Die Steuer- und Auswerteeinrichtung erhöht die Sensitivität der Sensoreinrichtung dann, wenn die Position der Schiebtür anzeigt, dass die Schiebtür sich wenigstens teilweise in dem erfassten Raumbereich befindet. Beispielsweise werden die Schwellwerte, die zu einem Ansprechen der Sensoranordnung führen geringer gewählt wenn die Tür geschlossen ist und eine teilweise Schirmung der Sensorelektrode wahrscheinlich ist. Bei geöffneter Tür werden höhere Schwellwerte zum Vergleich herangezogen.

In einer weiteren Ausführungsform wird die Anzahl der Zyklen erhöht, für welche Ladung von der Sensorelektrode auf einer Auswertekapazität akkumuliert wird. Bei dem dafür vorausgesetzten Auswerteverfahren wird die Sensorelektrode wiederholt umgeladen und Ladung auf einer Messkapazität akkumuliert. In Abhängigkeit von der aktuellen Kapazität der Sensorelektrode akkumuliert sich über eine vorgegebene Zyklenzahl eine bestimmte Ladungsmenge auf der Messkapazität, die dann über eine Spannungsmessung abgefragt werden kann. Zur Veränderung der Sensitivität der Erfassung in Abhängigkeit von der Türstellung wird dann die Zyklenzahl geändert. Beispielsweise werden dann, wenn von einer Schirmwirkung der Tür auszugehen ist, mehr Messzyklen durchgeführt als bei einer aus dem Erfassungsbereich verschobenen Tür.

Es ist zu beachten, dass das erstgenannte Beispiel die Auswertung der erfassten Messdaten betrifft, indem die Vergleichswerte verändert werden. Das zweite Verfahren betrifft die Ansteuerung der Sensorelektrode, da die tatsächlichen physikalischen Vorgänge an der Sensorelektrode beeinflusst werden.

In einer weiteren Ausgestaltung der Erfindung wird die Auswertespannung der Sensorelektrode in Abhängigkeit von der Türstellung angepasst.

Wiederum eine andere Ausgestaltung der Erfindung arbeitet mit einer bekannten Elektrodenanordnung für eine kapazitive Sensoreinrichtung mit einer Schirmelektrode (Shield-Elektrode). In Abhängigkeit von der Türstellung wird dabei die Shield-Spannung der Sensorelektrodenanordnung angepasst.

Die Erfindung wird im Weiteren anhand der beiliegenden Figur näher erläutert.

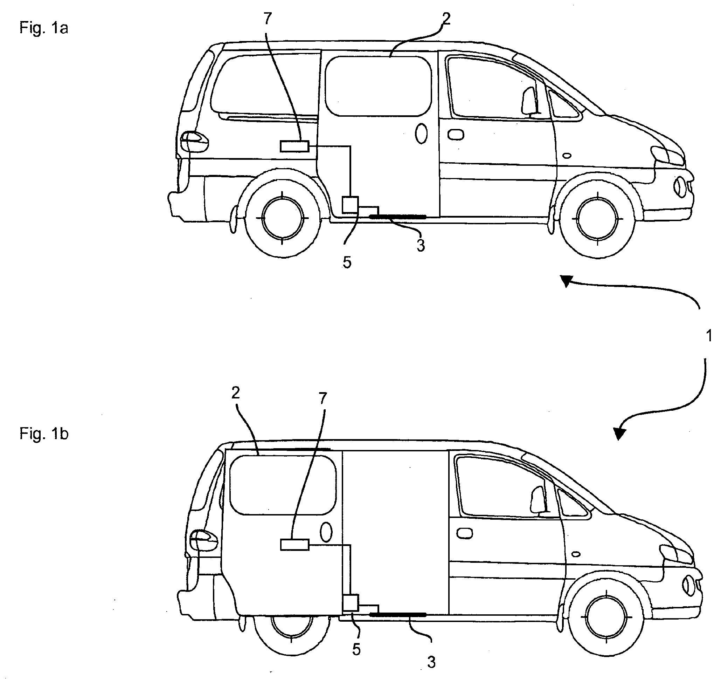

Figur 1a zeigt ein Fahrzeug mit einer erfindungsgemäßen Vorrichtung mit geschlossener Schiebetür;
Figur 1b zeigt ein Fahrzeug mit erfindungsgemäßer Vorrichtung mit geöffneter Schiebetür.

In Figur 1a ist ein Fahrzeug 1 gezeigt, welches eine seitliche Schiebetür 2 aufweist. Im unteren Bereich der Schiebetür ist eine Sensorelektrode 3 angeordnet, die deren Erfassungsbereich in einen Raumbereich unterhalb des Fahrzeuges gerichtet ist. Eine Steuer- und Auswerteeinrichtung 5 ist mit der Sensorelektrode 3 zur Ansteuerung in Auswertung gekoppelt. Eine Antriebseinrichtung 7 ist derart mit der Schiebetür gekoppelt, dass sie auf ein Steuersignal einer zentralen Steuereinrichtung des Fahrzeuges (nicht gezeigt) einen Öffnungsvorgang oder Schließvorgang der Schiebetür durch einen entsprechenden Stellantrieb bewirkt. Die Antriebseinrichtung 7 ist mit der Steuer- und Auswerteeinrichtung 5 gekoppelt und die Positionsinformationen der Schiebetür entlang des Verstellweges zwischen Öffnungsposition und Schließposition sind durch die Steuer- und Auswerteeinrichtung 5 abfragbar. In Abhängigkeit von den abgefragten Stellungsdaten aus der Antriebseinrichtung 7 wählt die Steuer- und Auswerteeinrichtung 5 ein Ansteuerungsschema für die Sensorelektrode 3.

Die grundlegende Funktionsweise der Sensoranordnung und der zugehörigen Auswerteschaltung 5 besteht in diesem Ausführungsbeispiel darin, die Sensorelektrode wiederholt mit einem Potential bzw. einer Spannung zu koppeln, um eine der Kapazität entsprechende Aufladung der Sensorelektrode 3 zu veranlassen. Durch eine Schalteinrichtung wird dann die Kopplung der Sensorelektrode 3 mit der Sensorspannung getrennt und die aufgeladene Sensorelektrode 3 wird mit einer Auswerteschaltung in der Steuer- und Auswerteeinrichtung 5 gekoppelt. Die Auswerteschaltung kann in Grundzügen einem Stromspiegel oder auch einer einfachen Stromquellenschaltung nachgebildet sein. Wesentlich ist, dass die Entladung der Sensorelektrode 3, also des zu prüfenden Kondensators über einen Stromzweig realisiert wird und ein davon abhängiger Ladungsfluss von einer konstanten Messkapazität in der Auswerteschaltung realisiert wird. In dieser Messkapazität bildet sich so über mehrere Schaltzyklen eine messbare Spannung, welche ein Maß für die zu vermessende Kapazität der Sensorelektrode ist. Die eingebaute Messkapazität in der Auswerteschaltung ermöglicht demnach die Akkumulation eines Messwertes über mehrere Schaltzyklen an der Sensorelektrode. Unter Akkumulation ist dabei zu verstehen, dass die Haltekapazität immer dann, wenn ein Stromfluss durch den Stromspiegel erfolgt eine Ladungsänderung erfährt. Diese Ladungsänderung wird gehalten, wenn der Stromfluss abbricht. Bei dem nächsten Zyklus wird erneut ein Stromfluss verursacht und weitere Ladung verschoben. Bei Beobachtung der Spannung an der Haltekapazität über mehrere Zyklen ist entsprechend ein treppenförmiger Spannungsverlauf zu erkennen, welche die akkumulierte Ladung verursacht. Sind genügend viele Zyklen absolviert trägt die Haltekapazität eine Ladung (und zeigt eine Spannung), welche ein Maß für die Kapazität der Sensorelektrode ist. Die Hilfskapazität wird nach Auswertung für eine erneute Folge von Zyklen wieder entladen, z.B. indem zeitweise eine geschaltete Kopplung mit Masse erfolgt.

Die Sensorelektrode 3 wird also im Zustand mit geschlossener Tür, wie in Figur 1a gezeigt, gemäß einem ersten Ansteuerungsschema angesteuert und gemäß einem ersten Auswerteschema werden die erfassten Messdaten ausgewertet. Das erste Ansteuerungsschema weist mehr Akkumulationszyklen für die Ladungsverschiebungen auf, z.B. 10-20 Zyklen.

In Figur 1b ist das Fahrzeug mit geöffneter Schiebetür gezeigt. Nun wählt die Steuer- und Auswerteeinrichtung 5 ein anderes Ansteuerungsschema für die Sensorelektrode 3, da die Beeinflussung der Sensorelektrode 3 durch die Schiebetür nun weitgehend wegfällt. Es werden also beispielsweise 5-9 Akkumulationszyklen gewählt.

Wesentlich ist, dass erfindungsgemäß der physische Zustand des Fahrzeuges, nämlich die Stellung der Schiebetür und die entsprechende Positionsinformation bei der Ansteuerung oder Auswertung der Sensorelektrode 3 berücksichtigt wird.

## Patentansprüche

1. Vorrichtung zur Erfassung einer Bediengeste zur Betätigung einer Schiebetür durch Ansteuern des Antriebs (7) einer Schiebetür an einem Fahrzeug (1), wobei die Schiebetür(2) entlang eines Bewegungsweges zwischen zwei Endlagen am Fahrzeug (1) verfahrbar ist,
mit einer Steuer- und Auswerteeinrichtung (5), welche mit einer kapazitiven Sensoreinrichtung (3) gekoppelt ist, wobei die Sensoreinrichtung zur berührungslosen Erfassung von Objekten in einem Raumbereich ausgebildet ist,
wobei der Antrieb (7) mit der Steuer- und Auswerteeinrichtung (5) der Sensoreinrichtung (3) koppelbar ist,
dass die Steuer- und Auswerteeinrichtung (5) in Abhängigkeit von den Positionsinformationen die Sensoreinrichtung (3) ansteuert,
**dadurch gekennzeichnet,**
**dass** die Steuer- und Auswerteeinrichtung (5) zum Empfang von Positionsinformationen über die Lage der Schiebetür (2) auf dem Bewegungsweg ausgebildet ist, und dass die Steuer- und Auswerteeinrichtung (5) die Sensitivität der Sensoreinrichtung (3) dann erhöht, wenn die Position der Schiebtür (2) anzeigt, dass die Schiebtür sich wenigstens teilweise in dem erfassten Raumbereich befindet.

2. Vorrichtung nach Anspruch 1, wobei die Steuer- und Auswerteeinrichtung die Sensorelektrode durch zyklische Umladung der Sensorelektrode ansteuert und eine nach einer vorgegebenen Zyklenzahl auf einer Kapazität akkumulierte Ladung als Signal auswertet, wobei die Sensitivität durch Veränderung der Anzahl von Akkumulationszyklen verändert wird.

3. Vorrichtung nach Anspruch 1, wobei die Steuer- und Auswerteeinrichtung (5) einen zum Ansprechen der Sensoreinrichtung erforderlichen Schwellwert bei der Auswertung der Signale der Sensoreinrichtung in Abhängigkeit von der Positionsinformation auswählt.

4. Vorrichtung nach einem der vorangehenden Ansprüche, wobei die Steuer- und Auswerteeinrichtung wenigstens zwei abgespeicherte Ansteuerungs- und Auswerteschemata mit unterschiedlichen Parametersätzen speichert und wobei diese Ansteuerungs- und Auswerteschemata unterschiedlichen Positionsintervallen der Schiebetür zugeordnet sind.

## Claims

1. A device for detecting an operating gesture for actuating a sliding door by actuating the drive (7) of a sliding door on a vehicle (1), wherein the sliding door (2) is moveable along a movement path between two end positions on the vehicle (1),
with a control and evaluation device (5) which is coupled to a capacitive sensor device (3), wherein the sensor device is designed for the touchless detection of objects in a room region,
wherein the drive (7) can be coupled to the control and evaluation device (5) of the sensor device (3),
that the control and evaluation device (5) activates the sensor device (3) as a function of the position information,
**characterized,**
**in that** the control and evaluation device (5) is designed for receiving position information regarding the position of the sliding door (2) on the movement path, and in that the control and evaluation device (5) increases the sensitivity of the sensor device (3) in particular when the position of the sliding door (2) indicates that the sliding door is located at least partly in the detected room region.

2. The device according to Claim 1, wherein the control and evaluation device activates the sensor electrode through cyclical charge reversal of the sensor electrode and evaluates as signal a charge that is accumulated on a capacity according to a default number of cycles, wherein the sensitivity is changed by changing the number of accumulation cycles.

3. The device according to Claim 1, wherein the control and evaluation device (5) selects a threshold value required for the responding of the sensor device during the evaluation of the signals of the sensor device as a function of the position information.

4. The device according to any one of the preceding claims, wherein the control and evaluation device stores at least two stored activation and evaluation schemata with different parameter sets and wherein these activation and evaluation schemata are assigned to different position intervals of the sliding door.

## Revendications

1. Dispositif de détection d'un geste de manipulation pour actionner une porte coulissante en commandant l'entraînement (7) d'une porte coulissante sur un véhicule automobile (1), dans lequel la porte coulissante (2) peut être déplacée le long d'un trajet de mouvement entre deux positions finales sur le véhicule (1),
comportant un dispositif de commande et d'évaluation (5), qui est couplé avec un dispositif de capteur capacitif (3), dans lequel le dispositif de capteur est conçu en vue d'une détection sans contact d'objets dans une zone spatiale,
dans lequel l'entraînement (7) peut être couplé avec le dispositif de commande et d'évaluation (5) du dispositif de capteur (3),
en ce que le dispositif de commande et d'évaluation (5) commande en fonction des informations de position le dispositif de capteur (3),
**caractérisé en ce que** le dispositif de commande et d'évaluation (5) est conçu pour recevoir des informations de position relatives à la position de la porte coulissante sur le chemin de trajet (2) et **en ce que** le dispositif de commande et d'évaluation (5) augmente ensuite la sensibilité du dispositif de capteur (3), quand la position de la porte coulissante (2) affiche que la porte coulissante se trouve au moins partiellement dans la zone spatiale détectée.

2. Dispositif selon la revendication 1, dans lequel le dispositif de commande et d'évaluation commande les électrodes de capteur par rechargement cyclique des électrodes de capteur et émet comme signal une charge accumulée sur une capacité sur un nombre de cycles prescrits, dans lequel la sensibilité est modifiée en variant le nombre des cycles d'accumulation.

3. Dispositif selon la revendication 1, dans lequel le dispositif de commande et d'évaluation (5) sélectionne une valeur seuil nécessaire pour amorcer le dispositif de capteur lors de l'évaluation des signaux du dispositif de capteur en fonction de l'information de position.

4. Dispositif selon une des revendications précédentes, dans lequel le dispositif de commande et d'évaluation mémorise au moins deux mécanismes de commande et d'évaluation mémorisés avec des jeux de paramètres différents et dans lequel ces mécanismes de commande et d'évaluation sont coordonnés à des intervalles de position différents de la porte coulissante.
